Europäisches Patentamt

(19) European Patent Office

Office européen des brevets

(11) Publication number: **0 233 496**
**B1**

## (12) EUROPEAN PATENT SPECIFICATION

(45) Date of publication of the patent specification:
**11.10.89**

(21) Application number: **87100787.8**

(22) Date of filing: **21.01.87**

(51) Int. Cl.⁴: **B62D 25/16, B62D 25/18**

(54) Motor vehicle body comprising mudguards arranged to screen at least some of the vehicle wheels.

(30) Priority: **04.02.86 IT 5292986 U**

(43) Date of publication of application:
**26.08.87 Bulletin 87/35**

(45) Publication of the grant of the patent:
**11.10.89 Bulletin 89/41**

(84) Designated Contracting States:
**DE ES FR GB NL SE**

(56) References cited:
**EP-A- 0 120 760**
**EP-A- 0 121 641**
**FR-A- 2 441 529**
**GB-A- 2 146 598**
**US-A- 2 160 835**
**US-A- 2 714 015**
**US-A- 3 198 545**
**US-A- 3 632 137**
**US-A- 3 929 352**
**US-A- 4 382 606**

(73) Proprietor: **IVECO FIAT S.p.A., Via Puglia 35,
I-10156 Torino(IT)**

(72) Inventor: **Savio, Piero, Via Boito, 1,
I-10040 Borgaretto(IT)**

(74) Representative: **Prato, Roberto et al, c/o Ingg. Carlo e
Mario Torta Via Viotti 9, I-10121 Torino(IT)**

## Description

This invention relates to a motor vehicle body, and in particular an industrial vehicle body, comprising mudguards arranged to screen at least some of the vehicle wheels.

Are well known simple splash guard comprising a rectangular sheet of material which is disposed vertically behind a wheel of the vehicle in order to screening a restriction zone behind it.

A splash guard of this type in which at least one continuous traverse rib is formed on the face of the sheet presented to the vehicle wheel is described in US-A 3 929 352. A splash guard of this type can only screen a restricted zone behind the wheel directing water and dirt under the vehicle body and therefore this guard cannot reduce in a substantial manner the quantity of water-in-air suspension which is formed when the vehicle runs, at high speed, on wet ground.

When a vehicle runs on wet ground, and in particular when the vehicle speed is fairly high, large quantities of water are displaced by each wheel with the result that the aerodynamic action created by the air flow grazing the vehicle body forms a water-in-air suspension which completely surrounds the vehicle body, particularly in the zone closest to the wheels. In this respect, most of the water displaced by the wheels is projected by centrifugal action against the mudguard inner surface, which then directs the striking air flow in various directions to result in intense mixing of the water with the air to form the said suspension.

Large quantities of water-in-air suspension moving with the motor vehicle are known to be particularly annoying and dangerous to drivers of other vehicles because of the considerable water quantity projected on to such vehicles and the considerable kinetic energy thereof.

The object of the present invention is to provide a motor vehicle body which obviates the aforesaid drawback by substantially reducing, in particular in the vehicle wheel region, the quantity of water-in-air suspension which is formed when the vehicle runs on wet ground.

This object is attained by a motor vehicle body comprising mudguards arranged to screen at least some of the vehicle wheels, each of said mudguards having screening surfaces disposed peripherally about the relative wheel, characterised in that each of said screening surfaces is provided with a plurality of side-by-side ribs, each of which extends from the laterally more outer edge to the laterally more inner edge of the surface and each of which is inclined in such a manner as to be directed both towards said laterally more inner edge and in the opposite direction to the direction of the tangential velocity with which that surface zone of the wheel lying below said rib rotates when the vehicle is running.

The present invention will be more apparent from the detailed description thereof given hereinafter by way of example with reference to the accompanying drawings, in which:

Figure 1 is a perspective view of the front part of a heavy motor vehicle body constructed in accordance with the present invention;

Figure 2 is a plan view of the body part of the preceding figure;

Figure 3 is a diagrammatic perspective view of a mudguard of the body of the preceding figures and the relative wheel;

Figure 4 is a perspective view of a mudguard and the relative wheel corresponding to a different embodiment of the invention. The vehicle body of the invention, of which only part is shown in Figures 1 and 2, is particularly suitable for use in a heavy vehicle, but can be suitable for any other vehicle, for example an automobile.

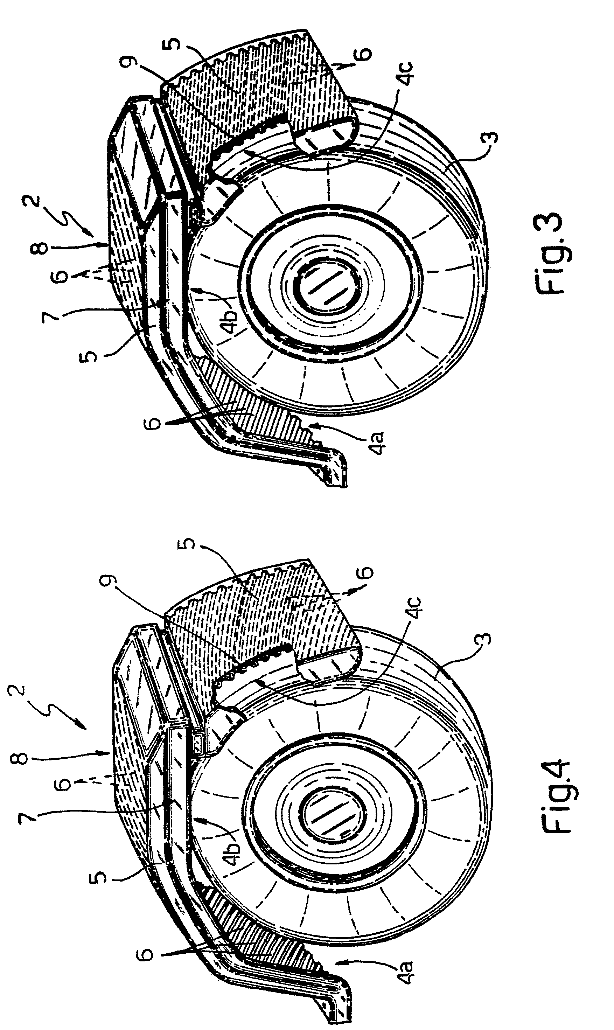

Said vehicle body, indicated overall by the reference numeral 1, comprises mudguards 2, each of which is arranged to screen a corresponding vehicle wheel 3. Each mudguard comprises a plurality of screening surfaces 4 (Figures 3 and 4) defined by the inner surfaces of the mudguard walls 5. As shown in Figures 3 and 4, said walls can be more than one in number and can be of any shape. In the illustrated case, which relates to an industrial vehicle body, each mudguard comprises a pair of walls 5 of different shape and dimensions, as can be clearly seen in the figures.

According to the invention, each screening surface 4 is provided with a plurality of side-by-side ribs 6, each of which extends from the laterally more outer edge 7 to the laterally more inner edge of the relative surface. In addition, each of said ribs is inclined in such a manner as to be directed both towards the laterally more inner edge 8 and in the opposite direction to the direction of the tangential velocity with which that wheel surface zone lying immediately below the rib rotates when the vehicle is running. Consequently, in the case of the mudguard ribs of Figures 3 and 4, it is assumed that the normal running direction causes the wheels to rotate in an anti-clockwise direction, and that the said tangential velocity is therefore represented by vectors lying on the outer wheel surface and directed in the said anti-clockwise direction.

Conveniently said ribs are either rectilinear, as in the embodiment shown in Figure 3, or are curved. Helical ribs such as those shown in Figure 4 have proved particularly suitable.

Conveniently each of the screening surfaces 4 can comprise ribs 6 forming a different angle to the direction of the tangential velocity of the wheel 3. In the embodiment shown in Figure 4, substantially three different screening surfaces can be identified, in that that wall 5 of the mudguard 2 to the left in Figure 4 comprises substantially a pair of screening walls 4a, 4b, the first of which is curved whereas the second is substantially flat, and that wall 5 of the mudguard lying to the right in Figures 3 and 4 comprises one screening surface 4c, which is curved.

Consequently in the embodiment shown in Figures 3 and 4, the screening surfaces 4a and 4c can comprise side-by-side ribs 6 having substantially the same inclination to the said tangential velocity direction, whereas the ribs of the screening surface 4b can have a different inclination, for example less than the inclination of the ribs provided on the other two screening surfaces.

Conveniently, the width of each rib 6 can vary in passing from the peripherally more outer edge 7 to the peripherally more inner edge 8, or the height of each of said ribs can vary in passing from one to the other of the two said edges. In this manner the cross-section of the channel defined between two adjacent ribs can vary in passing from the laterally more outer edge 7 to the laterally more inner edge 8.

Said ribs can either be formed integrally with the material with which the walls 5 of the mudguard 2 are constructed, or can be provided on support elements 9 which are then fixed to the mudguard walls 5. In this second case, said support elements are conveniently constructed of thermoplastic material.

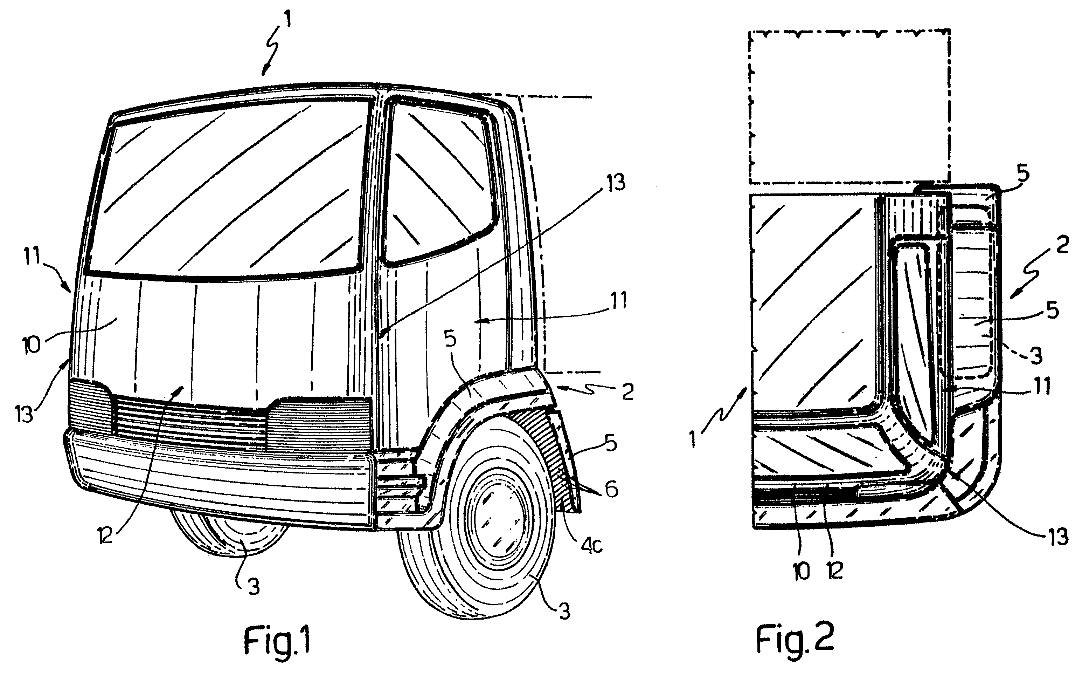

If the vehicle body of the invention comprises a driver's front cab 10, of the type shown in Figures 1 and 2, the body thus being of an industrial vehicle, said cab will comprise two side surfaces 11 and a front surface 12. In this case, according to the invention, each of said side surfaces is connected to the front surface by a connection zone 13, the minimum radius of which is greater than 100 mm. As will be more apparent hereinafter, it has in fact been found that a connection radius of the said value results in the favourable effects described hereinafter.

The behaviour of the described vehicle body when in operation is as follows.

When the vehicle travels along a wet road, in particular at fairly high speed, large quantities of water are lifted by each vehicle wheel 3, most of which is projected by centrifugal action against the screening surfaces 4a, 4b, 4c of each mudguard 2. Because of the presence of the ribs 6, the water which strikes said surfaces is not projected in other directions to form a water-in-air suspension as happens in the case of vehicle bodies provided with mudguards of normal type, but instead is substantially conveyed into the channels formed between adjacent ribs 6. As said channels are directed substantially towards the peripherally inner edge 8 of each mudguard, this water is discharged towards the centre of the vehicle frame and thus into a zone at which the water falls to the ground substantially in the centre of the vehicle. It has been found that in addition to preventing subsequent rebounding of the water flow which strikes the inner surfaces of the mudguard, the ribs 6 convey the flow towards the central zone of the vehicle, to thus prevent formation of a large quantity of water-in-air suspension outwards from the sides of the vehicle. By suitably choosing the size of said ribs it is substantially possible to discharge into the indicated zone most of the water which is lifted by the wheels. In addition, if the rib width or height varies between the laterally more outer edge 7 and the laterally more inner edge 8, the channels formed by the ribs can have a useful cross-section, for the purposes of water discharge, which varies in the direction of the channel axis and thus varying water speeds and throughputs along each of said channels can be obtained to give more effective water discharge through the channels.

It has also been found that the effect which favours the prevention of a large quantity of water-in-air suspension being formed to the side of the vehicle is considerably enhanced if the radius of curvature of the connection zone 13 between the side surfaces 11 and front surface 12 of the vehicle body is chosen as stated heretofore. In this respect, if this radius is sufficiently large, namely greater than the stated value, the air flow which laterally grazes each side wall surface 11 is not deviated substantially from the surface but grazes along it. The resultant air stream moving along each side wall of the vehicle prevents the formation of vacuum in the zone between each mudguard 2 and wheel 3 which would tend to prevent regular water movement in the aforesaid direction through the channels defined by the ribs 6. If the connection radius is less than the stated value, the air stream tends to separate from the surfaces 11 with the result that a suction effect can be generated causing some obstacle to regular water movement.

It is apparent that modifications can be made to the described embodiments of the present invention but without leaving the scope of the invention idea. In particular, although a heavy vehicle body has been considered, the inventive concept can be applied to a vehicle body of any other type, for example of an automobile. Furthermore, although the inventive concept has been applied and described with reference to a vehicle front mudguard, it can be applied to the rear mudguard, with the described beneficial effects being substantially unchanged in the case of the vehicle rear mudguards provided they have the structure described with reference to the front mudguards.

**Claims**

1. A motor vehicle mudguard arranged to a screen a vehicle wheel (3) comprising a plurality screening walls (4) disposed peripherally about the relative wheel (3), at least one of said walls being curve, characterized in that each of said screening walls (4) is provided on the surface in front of the wheel with a plurality of side-by-side inclined ribs (6) each of which extends from the laterally more outer edge (7) to the laterally more inner edge (8), the inclination of each of said ribs being chosen in sich a manner as to be directed both towards the longitudinal axis of the vehicle and in the opposite direction of tangential velocity with which rotates the surface zone of the wheel lying below said rib.

2. A motor vehicle mudguard as claimed in claim 1, characterized in that the width of each of said ribs (6) varies in passing from said peripherally more outer edge (7) to said peripherally more inner edge (8).

3. A motor vehicle mudguard as claimed in one of the preceding claims, characterized in that it is mounted on a vehicle body defining a driver's front cab (10) provided with at least on pair of lateral sidewall surfaces (11) and a front surface (12), each of said lateral surfaces being connected to said front surface by a connection zone (13) the minimum radius of which exceeds 100 mm.

4. A motor vehicle mudguard as claimed in one of the preceding claims, characterized in that said ribs (6) are rectilinear.

5. A motor vehicle mudguard as claimed in one of the claims from 1 to 3, characterized in that said ribs (6) are curved.

6. A motor vehicle mudguard as claimed in claim 5, characterized in that said ribs (6) are helical.

7. A motor vehicle mudguard as claimed in one of the preceding claims, characterized in that said inclination of each of said ribs is different from that of the adjacent ribs.

8. A motor vehicle mudguard as claimed in one of the preceding claims, characterized in that the height of each of said ribs (6) varies in passing from said peripherally more outer edge (7) to said peripherally more inner edge (8).

9. A motor vehicle mudguard as claimed in one of the preceding claims, characterized in that said ribs (6) are formed integrally with the material with which said mudguard walls (4) are constructed.

10. A motor vehicle mudguard as claimed in one of the preceding claims, characterized in that said ribs (6) are provided on support elements (9) fixed to said mudguard walls.

11. A motor vehicle mudguard as claimed in claim 9, characterized in that said support elements (9) are constructed of plastics material.

**Patentansprüche**

1. Kotflügel für Motorfahrzeug, so konstruiert, daß er einen Fahrzeugreifen (3) abschirmt, bestehend aus einer Anzahl an Schutzblechen (4), die außen über dem entsprechenden Reifen (3) angebracht sind, wenigstens eines besagter Bleche ist gebogen, dadurch gekennzeichnet, daß jedes dieser Schutzbleche (4) an der Oberfläche, die gegenüber des Reifens liegt, mit einer Anzahl an nebeneinanderliegenden schrägen Verstrebungen (6) versehen ist, wobei sich jede vom seitlichen äußeren Rand (7) zum seitlichen inneren Rand (8) hin erstreckt, die Neigung einer jeden dieser besagten Verstrebungen ist so gewählt, daß sie sowohl entlang der Längsachse des Fahrzeugs als auch in der tangentialen Geschwindigkeit, mit der sich die Oberflächenzone des Reifens, der sich unterhalb der Verstrebung befindet, entgegengesetzter Richtung, ausgerichtet werden können.

2. Kotflügel für Motorfahrzeug, nach Anspruch 1, dadurch gekennzeichnet, daß sich die Breite der einzelnen besagten Verstrebungen (6) im Übergang vom besagten äußeren Rand (7) hin zu besagtem inneren Rand (8) verändert.

3. Kotflügel für Motorfahrzeug nach einem der vorangegangenen Ansprüche, dadurch gekennzeichnet, daß er auf einer Fahrzeugkarosserie montiert ist, genauer, auf die Frontseite (10) eines Führerhauses, versehen mit einem Paar seitlicher Seitenflächen (11) und einer vorderen Fläche (12), jede der seitlichen Flächen ist mit der vorderen Fläche durch eine Verbindungszone (13) verbunden, deren Mindestradius 100 mm beträgt.

4. Kotflügel für Motorfahrzeug, nach einem der vorangegangenen Ansprüche, dadurch gekennzeichnet, daß die besagten Verstrebungen (6) geradlinig sind.

5. Kotflügel für Motorfahrzeug, nach einem der Ansprüche 1 bis 3, dadurch gekennzeichnet, daß die besagten Verstrebungen (6) gebogen sind.

6. Kotflügel für Motorfahrzeug, nach Anspruch 5, dadurch gekennzeichnet, daß besagte Verstrebungen (6) schraubenförmig sind.

7. Kotflügel für Motorfahrzeug, nach einem der vorangegangenen Ansprüche, dadurch gekennzeichnet, daß besagte Neigung der einzelnen besagten Verstrebungen verschieden ist von der danebenliegenden Verstrebung.

8. Kotflügel für Motorfahrzeug, nach einem der vorangegangenen Ansprüche, dadurch gekennzeichnet, daß die Höhe der einzelnen besagten Verstrebungen (6) sich im Übergang vom besagten äußeren Rand (7) hin zu besagtem inneren Rand (8) verändert.

9. Kotflügel für Motorfahrzeug, nach einem der vorangegangenen Ansprüche, dadurch gekennzeichnet, daß besagte Verstrebungen (6) aus demselben Material bestehen, aus dem die besagten Schutzbleche (4) konstruiert sind.

10. Kotflügel für Motorfahrzeug, nach einem der vorangegangenen Ansprüche, dadurch gekennzeichnet, daß besagte Verstrebungen (6) mit Stützelementen (9) versehen sind, die an den Schutzblechen befestigt sind.

11. Kotflügel für Motorfahrzeug, nach Anspruch 9, dadurch gekennzeichnet, daß besagte Stützelemente (9) aus Kunststoff bestehen.

**Revendications**

1. Garde-boue de véhicule à moteur disposé de façon à faire écran à une roue (3) de véhicule, comprenant plusieurs parois (4) formant écran disposées périphériquement autour de la roue associée (3), au moins l'une desdites parois étant incurvée, caractérisé en ce que chacune desdites parois (4) formant écran comporte, sur la surface faisant face à la roue, plusieurs nervures inclinées côte à côte (6) s'étendant chacune du bord (7) latéralement plus extérieur vers le bord (8) latéralement plus intérieur, l'inclination de chacune desdites nervures étant choisie de manière à être dirigée à la fois vers l'axe longitudinal du véhicule et dans le sens opposé de la vitesse tangentielle avec laquelle tourne la zone de surface de la roue située au-dessous de ladite nervure.

2. Garde-boue de véhicule à moteur selon la revendication 1, caractérisé en ce que la largeur de chacune desdites nervures (6) varie en passant dudit bord (7) périphériquement plus extérieur audit bord (8) périphériquement plus intérieur.

3. Garde-boue de véhicule à moteur selon l'une des revendications précédentes, caractérisé en ce qu'il est monté sur une caisse de véhicule définissant une cabine frontale (10) de conduite présentant au moins une paire de surfaces de parois latérales (11) et une surface frontale (12), chacune desdites surfaces latérales étant reliée à ladite surface frontale par une zone (13) de raccordement dont le rayon minimal dépasse 100 mm.

4. Garde-boue de véhicule à moteur selon l'une des revendications précédentes, caractérisé en ce que lesdites nervures (6) sont rectilignes.

5. Garde-boue de véhicule à moteur selon l'une des revendications 1 à 3, caractérisé en ce que lesdites nervures (6) sont incurvées.

6. Garde-boue de véhicule à moteur selon la revendication 5, caractérisé en ce que lesdites nervures (6) sont hélicoïdales.

7. Garde-boue de véhicule à moteur selon l'une des revendications précédentes, caractérisé en ce que ladite inclinaison de chacune desdites nervures est différente de celle des nervures adjacentes.

8. Garde-boue de véhicule à moteur selon l'une quelconque des revendications précédentes, caractérisé en ce que la hauteur de chacune desdites nervures (6) varie en passant dudit bord (7) périphériquement plus extérieur audit bord (8) périphériquement plus intérieur.

9. Garde-boue de véhicule à moteur selon l'une quelconque des revendications précédentes, caractérisé en ce que lesdites nervures (6) sont réalisées d'une seule pièce avec la matière dont sont fabriquées lesdites parois (4) du garde-boue.

10. Garde-boue de véhicule à moteur selon l'une quelconque des revendications précédentes, caractérisé en ce que lesdites nervures (6) sont prévues sur des éléments (9) de support fixés auxdites parois du garde-boue.

11. Garde-boue de véhicule à moteur selon la revendication 9, caractérisé en ce que lesdits éléments (9) de support sont réalisés en matière plastique.

Fig.1

Fig.2

EP 0 233 496 B1

Fig.3

Fig.4